# EUROPEAN PATENT APPLICATION

(11) **EP 2 660 748 A1**
(43) Date of publication of application: **06.11.2013**
(21) Application number: 12305436.3
(22) Date of filing: 13.04.2012
(51) Int. Cl.: G06F 21/30

(54) **Method and system for managing password**

(71) Applicant: Gemalto SA, 92190 Meudon (FR)
(72) Inventor: Girard, Pierre, 92190 MEUDON (FR); Pahaut, Olivier, 92190 MEUDON (FR)

(57) **Abstract**

The present invention relates to a method for managing credentials of a user. The present invention relates to a password manager for credentials of services in the virtual world (over the internet) and in the physical world. The password manager of the invention is configured for easy and ergonomic use. The present invention is defined, in its broadest sense, as a method of managing credential into a mobile terminal wherein said credential comprising a secret data associated through an allocated resources to a picture of an object during an enrollment step, and wherein during a retrieval step when a selected picture matches with the picture of an object previously stored then the secret data associated to said selected picture from the corresponding credential is extracted and communicated to the user by for example displayed it on the terminal. The purpose of this invention is to allow the user not to need to remember those entire passwords and code and may thus increase the complexity of those passwords and code.

## Description

### FIELD OF THE INVENTION

The present invention relates to a method for managing numerous codes and passwords of a user. The invention also pertains to a device using said method.

### BACKGROUND OF THE INVENTION

Today, users have accumulated a variety of disparate passwords for accessing services over the Internet and in the physical world. Therefore, more and more passwords and codes have to be managed by each user like Web passwords, computer passwords, codes for buildings, parking lots, padlocks, credit cards, voice mail, radio cars, home alarms, mobile phones and more ....

To make management easier, some users may attempt to keep a single password for all services. As such, users are often inclined to use character sequences that are already known to them, such as a social security number, telephone number, license plate number, birthday, or password to another system. Thus, when one service's policy requires a change, the user manually changes the password with all the other remaining services. This approach also has some security risks, since if the password is compromised, the password can be used with all other services associated with the user. Thus, if a password is compromised it is entirely likely that the other services of the users are also going to be compromised.

In some cases, the users attempt to manage these passwords themselves, which becomes difficult to achieve when the passwords have to respect some requirements according to a predefined format and to password policies. For example, it may be required that a password have at least one numeric character and an uppercased alphabetic character. Conversely, some others may require a punctuation character. Still further, it may be required that passwords be re-established or reset after a predefined elapsed period of time. Thus, the format and policies will often vary from service to service. As a result, a user can quickly become overwhelmed with managing passwords for services that the user interacts with.

One known solution is password managers for computers which are helpful. Indeed, some directory services or password services have somewhat alleviated the problem by permitting users to store their various passwords in a central repository. Users access the central repository and from there the users are either supplied their passwords or the directory service supplies selective passwords to desired services on behalf of the users. Additionally, with an approach such as this a user is not tempted to have a single password for all the various services of the user, since management can be facilitated through the password service.

However, those passwords managers for computers mainly target the passwords for services over the Internet like web passwords. They are useless for login password or codes in the physical world. In addition, they suffer from a poor usability; they lack mobility, and may have a questionable security.

Further alternative and advantageous solutions would, accordingly, be desirable in the art.

### SUMMARY OF THE INVENTION

The following presents a simplified summary in order to provide a basic understanding of some aspects of the disclosed embodiments. This summary is not an extensive overview and is intended to neither identify key or critical elements nor delineate the scope of such embodiments. Its purpose is to present some concepts in a simplified form as a prelude to the more detailed description that is presented later.

The invention provides a password manager for passwords over the internet and in the physical world. The purpose of this invention is to allow to the user to not need to remember those entire passwords and code and may thus increase the complexity of those passwords and codes. The password manager of the invention is configured for easy and ergonomic use.

The present invention is defined, in its broadest sense, as a method of managing credential of a user into a mobile terminal wherein said credential comprising a secret data associated through an allocated resources to at least a picture of an object during an enrollment step, and wherein during a retrieval step when a selected picture matches with the picture of an object previously stored then:
- extracting the secret data associated to said picture previously stored from the corresponding credential, and
- communicating the extracted secret data to the user.

Additionally, the invention describes methods for securely archiving enrolled personal identity credentials. This is to allow users to restore previously validated credentials into a new device without requiring a completely new enrollment.

The present invention also relates to a mobile device comprising means to execute the present invention.

### BRIEF DESCRIPTION OF THE DRAWINGS

The following detailed description will be better understood with the drawings, in which:
Figure 1 represents a device used in the method according to an embodiment of the present invention;
Figure 2 illustrates the different steps of the method according to an embodiment of an enrollment process of the present invention; and
Figure 3 illustrates the different steps of the method according to an embodiment of retrieval process of the present invention.

### DETAILED DESCRIPTION OF THE EMBODIMENTS OF THE INVENTION

The same elements have been designated with the same reference numerals in the different drawings. For clarity, only those elements and steps which are useful to the understanding of the present invention have been shown in the drawings and will be described.

In particular, the resources used by a terminal have not been detailed, the present invention being compatible with any current use of a hardware or software resource. Further, the mechanisms of data communication between the terminal and its environment have not been detailed either, the present invention being here again compatible with usual mechanisms.

Moreover, when an action is said to be performed by a terminal, it is in fact executed by a microprocessor in this terminal controlled by instruction codes recorded in a program memory on the said terminal. An action is also ascribed to an application or software. This means that part of the instruction codes making up the application or software are executed by the microprocessor.

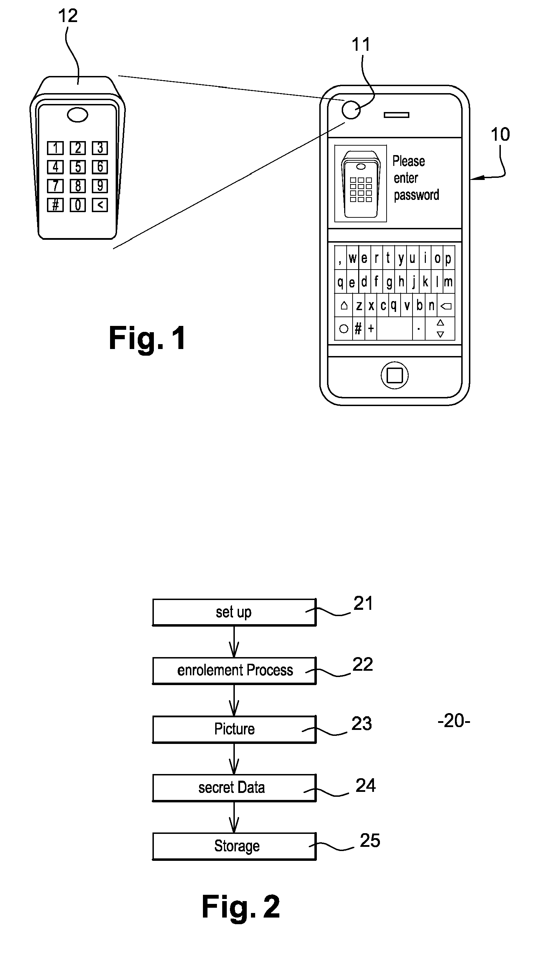

FIG. 1 schematically shows a terminal 10 on which the present invention is applied as an embodiment. Said terminal 10 can for instance be a mobile phone, a PDA, a tablet computer, a Laptop or a notebook. In a preferred embodiment, the terminal 10 can be any mobile device. In the embodiment illustrated at Figure 1, the terminal 10 is equipped with a camera 11.

The method of the invention is software to be downloaded to the terminal 10. The software can be provided to the terminal by a service provider. To download this software, the service provider can send to the terminal 10 a SMS including a downloading link of the software from a database of said provider. In another embodiment, the software can be downloaded directly through a link accessible from the website provider. By clicking on the download link, the user can install the software onto the terminal 10.

In another embodiment, the software is integrated in the operating system that controls the execution of the instruction codes of the program memory. In another embodiment, the software of the invention is downloaded to the terminal 10 at the time of manufacture.

In a preferred embodiment, resources allocated to the password manager software onto the terminal 10 are protected so that it is only accessed during enrollment process or retrieval process if the requesting user is both authenticated and authorized. In an instance, when a user wishes to access to the protected resources, he or she inputs a master Personal Identification Number (PIN) code or a biometric data, by using the terminal keypad. Upon authorization of the user, the access of the software is achieved.

FIG. 2 shows a flow chart of an embodiment of an enrollment process 20 according to the implemented invention for managing user passwords or codes. In this environment, a user of the terminal 10 desires to store password or code in the terminal 10.

At a first step 21, upon receiving an input from a user to set up the password manager software, the terminal 10 launches the execution of said software. Then, a graphic keyboard is displayed on the terminal 10. It comprises a first area selector allowing the user to select the execution of an enrollment process and a second area selector allowing the user to select the execution of a retrieval process. At step 22, the user selects the enrollment process by for instance clicking on the corresponding area selector.

At step 23, the terminal 10 displays a message for selecting a digital picture of an object 12 to be associated to a secret data. For example, a graphic keyboard displayed on the terminal comprises the following request "Please select a picture and click OK".

The secret data is generally recognized as either a confidential word, a phrase, a sequence of alpha-numerics, a sequence of characters, a combination of numerical, alphabetic or symbolic characters. Secret data should be known only by the user performing the password manager software of the invention. Secret data typically comprises PIN codes, passphrases or passwords.

The object 12 can be a computer, a building, a parking, a padlock, a credit card, a radio car, a home alarm, a mobile phone, a Web document, a Laptop and so on.

In an embodiment, to select a picture, a camera 11 is triggered automatically by the terminal 10 or manually by the user. In a variant, the picture can be provided by the terminal 10 (hard disk containing the photographs), any other memories devices connected to the terminal or by an accessible Web server.

After selecting this picture, a graphic keyboard comprising a message to enter the secret data to be associated to the selected picture is displayed, at step 24, on the terminal. For instance, the graphic keyboard displayed the following message "Please enter your secret data".

The user provides the requested secret data by entering information through a virtual or physical keyword. In an embodiment, the secret data is chosen by users or provided to the user by a third party or by an OTP tokens (OTP stands for One Time Password).

In an embodiment, the secret data is entered into appropriate predefined format and/or policies required of this object. For example, it may be required that the secret data have at least one numeric character, an uppercased alphabetic character and/or a punctuation character. Still further, it may be required that secret data be re-established or reset after a predefined elapsed period of time. In this case, an alert can be sent to the user when the period time is elapsed.

At step 25, the software stores into the resource of the terminal 10 allocated credentials to be managed, a credential comprising a entered secret data and a picture assigned to. The resource allocated is, for example, structured in the form of a table. For example, each row of the table corresponds to a credential with a first column comprising a selected picture and second column of the table comprising a secret data associated.

In an embodiment, for a better security, credentials are stored in a secure element. A secure element usually defines a device including a tamper proof smart card chip capable to embed smart card-grade applications with the required level of security. The secure element can be integrated in various form factors: smartcard, SIM Card, SD Card, M2M form factor, USB keys or embedded in a larger circuit.

In an embodiment, the invention provides secure backup and recovery processes, such as a user may securely store the enrolled information (credentials set) in an electronic storage repository, such as a hard drive. If his terminal 10 or the software fails he can use the recovery process to transfer the stored, enrolled information to said terminal or a new terminal.

In another embodiment, the credentials stored can be shared with other terminals. In this case, either the credentials are shared through the terminal 10 and/or by online database which allows access to them from anywhere and from any device like computer or smart phone. In a preferred embodiment, the credentials owner sets viewing and editing permissions for others. When the permission is private, the access to the credentials is limited to people to whom the owner gives permission. Therefore, the credentials set are shared with specific people; the credentials owner can allow those people to edit and view the credentials sets, or simply to view it.

When a change is made to the record of the credentials it is preferable to trigger the synchronization on any one or more of the sharing terminals or in the online database. The synchronization process allows to the credentials set to be updated on the other terminals and/or on the online database. In a variant, when the credentials owner adds a new credential or makes a change on an old one, the synchronization process is triggered. In another variant, the records in each credentials set are compared in order to determine which records have changed since the last synchronization, and the respective credentials sets are updated accordingly.

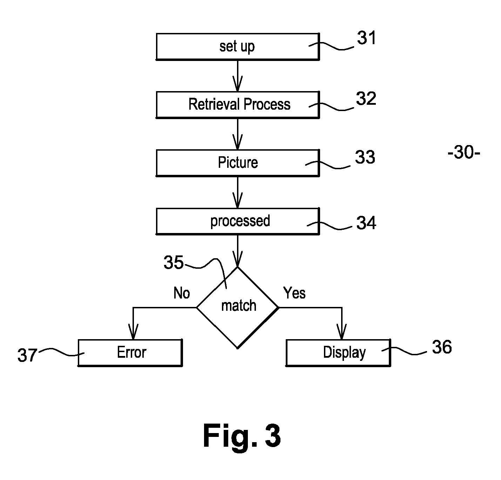

FIG. 3 shows a flow chart of an embodiment of a retrieval process 30 of a credential from the manager password. In this environment, a user of the terminal 10 desires to retrieve secret data previously stored.

At a first step 31, upon receiving an input from a user to set up the password manager software, the terminal 10 launches the execution of said software. At step 32, the user selects the retrieval process by, for instance, clicking on the corresponding area selector displayed on the terminal.

At step 33, the terminal 10 displays a message for selecting a digital picture of an object 12 to be associated to a secret data. For example, a graphic keyboard displayed on the terminal comprises the following request "Please select a picture and click OK". After selected this picture, the software sets up, at step 34, well known image recognition processes to be applied to the pictures.

The selected picture processed is compared to the pictures of the credentials stored to determine if said selected picture is an exact (or close) duplicate of one stored. For that, at step 35, the terminal analyses whether the selected picture matches a picture previously stored. If the answer is yes, then the terminal 10 authorizes, at step 36, to extract on the corresponding credential the secret data associated to the selected pictured and to communicate it to the user. To communicate it to the user, the secret data can be:
- displayed on the screen of the terminal 10,
- sent by email or SMS,
- output to the user thank to a speech synthesis,
- or sent to another terminal through NFC, Bluetooth, WiFi, 3G, 2G or any existing communication protocol,

This list is obviously not exhaustive.

In an embodiment, the way to communicate the secret data to the user may be selected by default or manually by the user from a set of predefined communication scheme.

If the answer is no, i.e. when the selected picture does not correspond with a picture previously stored, then the terminal 10 elaborates and displays, at step 37 a graphic keyboard comprising an error message. For instance, the graphic keyboard displayed the following message "Not found. Please re-select another picture".

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

For example, in an embodiment at least an identification parameter is associated to the picture during the enrollment process. An identification parameter can be a geolocation data, an alphanumeric character, a name, a combination of at least two identification parameters and so on. Each identification parameter is unique and specific to only one picture. Therefore, several identical pictures each associated with a unique secret data will be differentiated from each other through their identification parameter. Therefore, a new column wherein is stored the identification parameter is added to the corresponding credential into the table of the allocated resources.

In this case, during the retrieval process, the extraction of the corresponding secret data can be made with the identification parameter and/or the picture.

In an embodiment, at step 33, the terminal 10 conducts a search by the identification parameter by performing any of the methods below:
1. Type the name of the identification parameter in an auto-fill textbox and click the "Go" button. It can also be proposed to the user to select the identification parameter name from a dropdown list of identification parameters. It can also be proposed to the user to select multiple identification parameters.
2. Use a scrollbar to locate the identification parameter or identification parameters of interest and select the associated secret data.
3. Click the letter of the alphabet with which the name of the identification parameter begins, locate the identification parameter or identification parameters of interest and select the associated secret data.

The list of these searching methods is of course not exhaustive.

In another embodiment, at step 33, the terminal 10 displays a graphic keyboard or a menu comprising a first area selector allowing the user to extract the secret data with picture and at least a second area selector allowing the user to extract the secret data with an identification parameter.

In an embodiment, upon the user selects the wanted area by for instance clicking on the corresponding area selector, the terminal can displays a graphic keyboard or a menu comprising a first area selector proposing to extract the secret data automatically. If this first area selector is selected, the terminal 10 displays a message for entered a digital picture or an identification parameter according to the area selector selected by the user. Upon, the digital picture or the identification parameter is entered, the software sets up and looks up the table to extract the associated secret data.

The graphic keyboard or the menu displayed on the terminal comprises also a second area selector proposing to extract the secret data manually. If this second area selector is selected, the user can search through the table to find out the wanted picture or the identification parameter to extract the corresponding secret data.

## Claims

1. Method of managing credential of a user into a mobile terminal wherein said credential comprising a secret data associated through an allocated resources to at least a picture of an object during an enrollment step, and wherein during a retrieval step when a selected picture matches with the picture of an object previously stored then:
- extracting the secret data associated to said picture previously stored from the corresponding credential, and
- communicating the extracted secret data to the user.

2. Method according to the previous claim, wherein at least an identification parameter is associated to the picture previously stored of a credential through the allocated resources, said identification parameter being unique and specific to each picture stored so that to differentiate several identical pictures from each other.

3. Method according to the previous claim, wherein the identification parameter is a geolocation data, an alphanumeric character, a name or a combination of at least two identification parameters.

4. Method according to the claims 2 or 3, wherein the extracting step is performed with a search by the identification parameter and/or by the selected picture.

5. Method according to any previous claims, wherein the extracted secret data is communicated to the user by a display on a screen of the terminal, email or sms, speech synthesis, sending to another terminal.

6. Method according to any previous claims, wherein the access of the allocated resources is authorized during the enrollment step or the retrieval step if the requesting user is both authenticated and authorized.

7. Method according to any previous claims, wherein the picture is provided by a camera of the terminal, an image database or by a Web server.

8. Method according to any previous claims, wherein the secret data is chosen by the user, provided by a third party or generated by a One Time Password token.

9. Method according to any previous claims, wherein the credentials are stored in a secure element which is a SIM card, a SD card, a M2M card, a USB key or resources allocated into the terminal.

10. Method according to any previous claims, wherein it comprises further secure backup and recovery steps by storing the credentials set in an electronic storage repository.

11. Method according to any previous claims, wherein the stored credentials set are shared with other users according to viewing and/or editing permissions.

12. Method according to the previous claim, wherein a synchronization step is triggered on the sharing users when the credentials set are updated.

13. Method according to any previous claims, wherein the object is a computer, a building, a parking, a padlock, a credit card, a radio car, a home alarm, a mobile phones, a Web document or a Laptop.

14. Mobile terminal comprising a microprocessor that is programmed with instructions to cause the microprocessor to perform the method when those instructions are executed for managing credentials set comprising secret data associated through allocated resources of the terminal to a picture of an object, according to any previous claim.

15. Mobile terminal according to the previous claim wherein said terminal is a mobile phone, a PDA, a tablet computer, a Laptop or a notebook.
